(19) Europäisches Patentamt
European Patent Office
Office européen des brevets

(11) **EP 1 590 209 B1**

(12) **EUROPÄISCHE PATENTSCHRIFT**

(45) Veröffentlichungstag und Bekanntmachung des Hinweises auf die Patenterteilung:
**29.08.2007 Patentblatt 2007/35**

(21) Anmeldenummer: **03773553.7**

(22) Anmeldetag: **18.10.2003**

(51) Int Cl.:
**B60R 21/01** *(2006.01)*

(86) Internationale Anmeldenummer:
**PCT/DE2003/003502**

(87) Internationale Veröffentlichungsnummer:
**WO 2004/069606 (19.08.2004 Gazette 2004/34)**

(54) **VORRICHTUNG ZUR ANSTEUERUNG EINES RÜCKHALTESYSTEMS IN EINEM FAHRZEUG**

DEVICE FOR CONTROLLING A RESTRAINING SYSTEM IN A VEHICLE

DISPOSITIF POUR DECLENCHER UN SYSTEME DE RETENUE DANS UN VEHICULE.

(84) Benannte Vertragsstaaten:
**DE FR GB**

(30) Priorität: **28.01.2003 DE 10303146**

(43) Veröffentlichungstag der Anmeldung:
**02.11.2005 Patentblatt 2005/44**

(73) Patentinhaber: **ROBERT BOSCH GMBH**
**70442 Stuttgart (DE)**

(72) Erfinder: **THEISEN, Marc**
**74354 Besigheim (DE)**

(56) Entgegenhaltungen:
**DE-A- 10 065 518     DE-A- 10 100 880**
**DE-C- 19 818 586**

**Beschreibung**

Stand der Technik

Die Erfindung geht aus von einer Vorrichtung zur Ansteuerung eines Rückhaltesystems in einem Fahrzeug nach der Gattung des unabhängigen Patentanspruchs.

Aus DE 198 18 586 C1 ist ein Insassenschutzsystem bekannt, das eine Annäherungssensorik aufweist. Weiterhin ist in der Außenkontur des Fahrzeugs wenigstens ein Massenerkennungssensor vorgesehen, der zur Massenschätzung des Aufprallobjekts dient. Der Massenerkennungssensor kann als Druckdifferenzsensor oder als Beschleunigungssensor ausgebildet sein. Kennzeichnend ist, dass der Massenerkennungssensor von der Außenkontur weg zum Hindernis beweglich ist.

Aus DE 101 00 880 A1 ist ein Verfahren zur Aufprallerkennung bei einem Kraftfahrzeug bekannt. Dabei werden eine Knautschzonenverlängerung und Rückhaltemittel in Abhängigkeit von einer anhand von Precrashsensorsignalen bestimmten effektiven Masse eines Aufprallobjekts eingesetzt. Dabei wird eine Vorrichtung mit den Merkmalen des Oberbegriffs des unabhängigen Patentanspruchs offenbart.

Vorteile der Erfindung

Die erfindungsgemäße Vorrichtung zur Ansteuerung eines Rückhaltesystems in einem Fahrzeug mit den Merkmalen des unabhängigen Patentanspruchs hat dem gegenüber den Vorteil, dass mit der üblicherweise vorhandenen Sensorik für ein Rückhaltesystem, das ist die Inertialsensorik und die Precrashsensorik, sowie mit Fahrzeugdaten und der Eigengeschwindigkeit des Fahrzeugs eine solche Massenbestimmung des Aufprallobjekts erfolgen kann. Dies bedeutet eine erheblich einfachere Lösung, die weniger Aufwand in der Produktion und Entwicklung bedeutet. Damit wird es insbesondere möglich, die Unfallsituation genauer zu erfassen und damit die Rückhaltemittel des Rückhaltesystems besser anzusteuern.

Durch die in den abhängigen Ansprüchen aufgeführten Maßnahmen sind Weiterbildungen und vorteilhafte Verbesserungen der im unabhängigen Patentanspruch angegebenen Vorrichtung zur Ansteuerung eines Rückhaltesystems in einem Fahrzeug möglich.

Besonders vorteilhaft ist, dass das Precrashsignal die Relativgeschwindigkeit aufweist, die Fahrzeugdaten, die Masse und Steifigkeit des Fahrzeugs angeben, das Geschwindigkeitssignal, das von einem Geschwindigkeitssensor gemessen worden ist und beispielsweise auf dem CAN-Bus des Fahrzeugs zur Verfügung steht, die Geschwindigkeit des eigenen Fahrzeugs umfasst und das Aufprallsignal von einem Aufprallsensor stammt. Als Aufprallsensor wird vorzugsweise ein Beschleunigungssensor verwendet, aus dessen Signal in Abhängigkeit von der Aufprallgeschwindigkeit eine Crashtyperkennung erfolgen kann. Aus der Crashtyperkennung kann dann die Steifigkeit bestimmt werden, die zur Massenschätzung notwendig ist. Diese Steifigkeit ist die Steifigkeit des Aufprallobjekts.

Zeichnung

Ein Ausführungsbeispiel der Erfindung ist in der Zeichnung dargestellt und wird in der nachfolgenden Beschreibung näher erläutert.

Es zeigen:

Figur 1 ein Blockschaltbild der erfindungsgemäßen Vorrichtung und

Figur 2 ein Ablaufdiagramm.

Beschreibung

Aktuell wird durch eine Analyse des Beschleunigungssignals, das vom zentralen Beschleunigungssensor bzw. Upfrontsensor gemessen wird, sowohl die Aufprallgeschwindigkeit, die Steifigkeit als auch die Masse des bei einem Fahrzeugcrash aufprallenden Objekts ermittelt. Dabei können diese Parameter nur in Kombination festgestellt werden. Mit der Precrashsensorik wird es möglich, die Aufprallgeschwindigkeit zu messen und damit als unabhängige Größe zu verwenden. Damit müssen nur noch die beiden Parameter Masse und Steifigkeit in Kombination ermittelt werden. Diese Parameter sind die Parameter des Aufprallobjekts. Erfindungsgemäß wird die Masse des Aufprallobjekts als eine von der Steifigkeit unabhängige Größe ermittelt, um damit die Auslöseentscheidung von Rückhaltemitteln in einem Fahrzeug genauer, robuster und situationsgerechter treffen zu können. Aus der von der Precrashsensorik ermittelten Aufprallgeschwindigkeit und den Fahrzeugdaten über das eigene Fahrzeug wird die Masse des aufprallenden Objekts ermittelt. Dadurch wird es möglich, die Unfallsituation genauer zu erfassen und damit die Rückhaltemittel besser ansteuern zu können. Zu diesen Rückhaltemitteln gehören Airbags, Gurtstraffer und Überrollbügel.

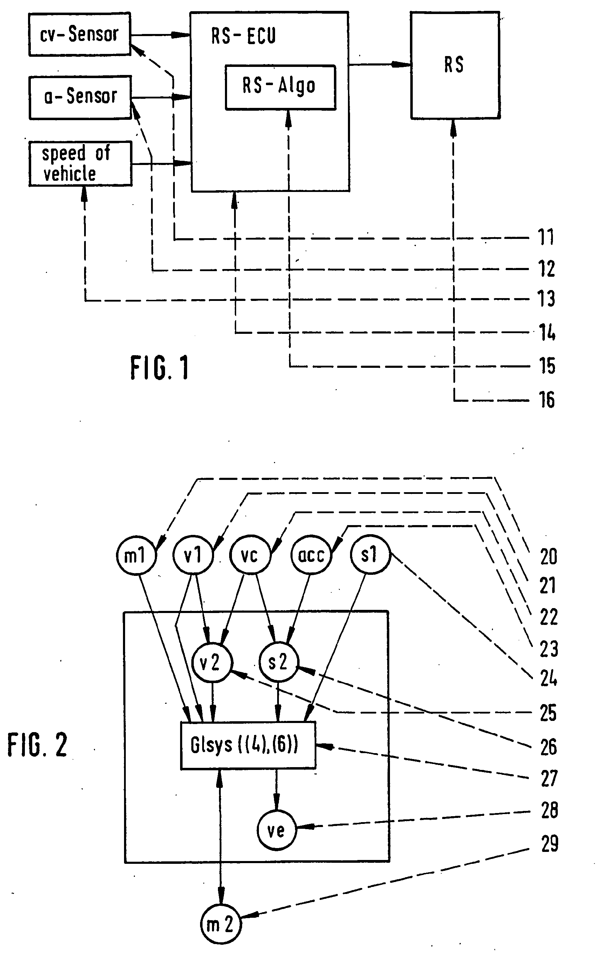

Figur 1 zeigt in einem Blockschaltbild die erfindungsgemäße Vorrichtung. Ein Umfeldsensor 11 ist an ein Steuergerät 14 über einen ersten Dateneingang angeschlossen. Ein Beschleunigungssensor 12 ist über einen zweiten Dateneingang und ein Sensor 13 zur Ermittlung der Eigengeschwindigkeit über einen dritten Dateneingang an das Steuergerät angeschlossen. Dabei ist es beispielsweise möglich, dass die Eigengeschwindigkeit auf dem CAN-Bus zur Verfügung steht und dass das Steuergerät von dort aus die Information über die Eigengeschwindigkeit erhält. Dem Steuergerät 14 ist ein Prozessor 15 zugeordnet, auf dem ein Algorithmus zur Berechnung der Auslösezeiten eines Rückhaltemittels abläuft. Es ist möglich, dass daneben weitere Algorithmen zur Steuerung anderer Rückhaltemittel abgearbeitet werden. Über einen Datenausgang ist das Steuergerät 14 mit den Rückhaltemitteln 16 verbunden. Diese Rückhaltemittel 16 sind beispielsweise Airbags, Gurtstraffer oder ein Überrollbügel. Die Ansteuerung für die Rückhaltemittel 16 kann entweder in dem Steuergerät 14 oder in einem weiteren Steuergerät für die Rückhaltemittel erfolgen. Beispielhaft sind hier jeweils nur ein Umfeldsensor 11 und ein Beschleunigungssensor 12 erwähnt. Es kann jedoch mehr als ein Umfeldsensor und mehr als ein Beschleunigungssensor benutzt werden. Der Umfeldsensor 11 ist beispielsweise ein Radar-, Ultraschall- oder Videosensor. Damit ist es insbesondere möglich, die Geschwindigkeit eines detektierten Objekts zu messen. Der Beschleunigungssensor dient als Aufprallsensor, der die aus dem Aufprall resultierende Beschleunigung ermittelt.

Der im Steuergerät ablaufende Algorithmus 15 ist in Figur 2 als ein Ablaufdiagramm dargestellt und basiert insbesondere auf dem Stoßgesetz zweier Körper. Bei einem Stoß bleiben Impuls und Energie erhalten. Wenn der Index 1 das Fahrzeug 1, der Index 2 das Fahrzeug 2, der Strich die Größe nach dem Stoß, m die Masse, v die Geschwindigkeit und $v_c$ die Relativgeschwindigkeit zwischen beiden Fahrzeugen, also die Aufprallgeschwindigkeit bezeichnen, dann gilt für die Erhaltung des Impulses:

$$m_1 v_1 + m_2 v_2 = m_1 v'_1 +_2 v'_2. \qquad (1)$$

Der Ablauf eines Crashs kann in zwei Phasen untergliedert werden: die Stoß- und die Bremsphase. Während der Stoßphase wirken auf den Insassen sehr große Verzögerungswerte, so dass der Insasse mit den Rückhaltesystemen geschützt werden muss, wohingegen während der Bremsphase nur noch derart geringe Verzögerungen aufgrund von Reib- oder Bremsvorgängen auftreten, so dass der Insasse nicht mehr durch die Rückhaltesysteme geschützt werden muss. Bei einem realen Crash kann mit hinreichender Genauigkeit davon ausgegangen werden, dass die Geschwindigkeit der beiden Fahrzeuge am Ende der Stoßphase gleich ist. Wenn $v_e$ die gemeinsame Endgeschwindigkeit ist, gilt daher:

$$v'_1 = v'_2 = v_e. \qquad (2)$$

Da betragsmäßig die Aufprallgeschwindigkeit gleich der Summe der beiden Eigengeschwindigkeiten ist, gilt:

$$v_1 + v_2 = v_c. \qquad (3)$$

Da $v_1$ die Eigengeschwindigkeit und $v_c$ die von der Precrashsensorik 11 gemessene Aufprallgeschwindigkeit sind, sind beide Geschwindigkeiten dem Steuergerät von Fahrzeug 1 bekannt. Somit kann über die Gleichung 3 $v_2$ berechnet werden. Ersetzt man $v_2$ durch die Differenz von $v_c$ und $v_1$ und setzt 2 in Gleichung 1 ein, dann ergibt sich:

$$m_1 v_1 + m_2 (v_c - v_1) = (m_1 + m_2) v_e. \qquad (4)$$

Wenn $E_{abgebaut}$ die abgebaute Energie ist abgebaute Energie ist, dann gilt für die Energiebilanz vor und nach dem Stoß:

$$\frac{1}{2}m_1 v_1^2 + \frac{1}{2}m_2 v_2^2 = E_{abgebaut} + \frac{1}{2}m_1 {v'}_1^2 + \frac{1}{2}m_2 {v'}_2^2. \quad (5)$$

Gleichung 2 in Gleichung 5 eingesetzt und $v_2$ durch die Differenz zwischen $v_c$ und $v_1$ ersetzt ergibt:

$$\frac{1}{2}m_1 v_1^2 + \frac{1}{2}m_2 (v_c - v_1)^2 = E_{abgebaut} + \frac{1}{2}(m_1 + m_2) v_e^2. \quad (6)$$

Unter der Vorraussetzung, dass $E_{abgebaut}$ bekannt ist, können die beiden unbekannten Größen $m_2$ und $v_e$ aus den Gleichungen 4 und 6 berechnet werden. Die abgebaute Energie ist dabei abhängig von der Aufprallgeschwindigkeit, der Masse und der Steifigkeit des eigenen Fahrzeugs und des aufprallen Objekts:

$$E_{abgebaut} = f(v_c, m_1, m_2, s_1, s_2). \quad (7)$$

Falls das gegnerische Objekt als das Aufprallobjekt fest im Boden verankert wird, dann entspricht dies einer unendlichen Masse $m_2$. Die Größen $v_c$, $m_1$ bzw. $s_1$ sind im Steuergerät durch die Precrashsensorik bzw. aus den eigenen Fahrzeugdaten bekannt, die in einem Speicher bereitgestellt sind. Die Steifigkeit $s_2$ des gegnerischen Objekts kann beispielsweise durch eine Crashtyperkennung aus dem Beschleunigungssignal und der Aufprallgeschwindigkeit ermittelt werden. Somit sind alle Parameter außer $m_2$ bekannt und $m_2$ kann über das System bestehend aus den Gleichungen 4 und 6 berechnet werden.

In Figur 2 ist noch einmal dargestellt, dass die Eingangsgrößen $m_1$ 20, $v_1$ 21, $v_c$ 22, acc 23 und $s_1$ 24 derart miteinander verknüpft werden, dass aus $v_1$ 21 und $v_c$ 22 die Geschwindigkeit $v_2$ des Aufprallobjekts bestimmt wird. $v_2$ ist hier mit dem Bezugszeichen 25 versehen. Die Steifigkeit $s_2$ des Aufprallobjekts wird aus $v_c$ 22 und acc 23 bestimmt. acc 23 bezeichnet hier die Beschleunigung oder ein davon abgeleitetes Signal, beispielsweise die integrierte Beschleunigung. Im Block 27 wird nunmehr aus den Gleichungen 4 und 6 sowie aus den Größen $m_1$, $v_1$, $v_2$, $s_2$ und $s_1$, die Endgeschwindigkeit der $v_e$ der beiden Fahrzeuge, wie auch die Masse $m_2$ 29 des Aufprallobjekts berechnet.

**Patentansprüche**

1. Vorrichtung zur Ansteuerung eines Rückhaltesystems (16) in einem Fahrzeug, wobei die Vorrichtung in Abhängigkeit von einer Massenschätzung eines Aufprallobjekts das Rückhaltesystem (16) ansteuert, **dadurch gekennzeichnet, dass** die Vorrichtung derart konfiguriert ist, dass die Vorrichtung die Massenschätzung in Abhängigkeit von der Relativgeschwindigkeit zwischen dem Fahrzeug und dem Aufprallobjekt ($v_c$), von der Masse ($m_1$) des Fahrzeugs sowie dessen Steifigkeit (S1) und von der Eigengeschwindigkeit und von einem Beschleunigungssignal durchführt, wobei mit diesen Größen mittels der Impulserhaltung und der Energieerhaltung die Massenschätzung erfolgt.

2. Vorrichtung nach Anspruch 1, **dadurch gekennzeichnet, dass** aus dem Beschleunigungssignal und der Aufprallgeschwindigkeit die Steifigkeit ($s_2$) des Aufprallobjekts bestimmbar ist.

**Claims**

1. Device for controlling a restraining system (16) in a vehicle, the device controlling the restraining system (16) on the basis of an estimation of the mass of an impact object, **characterized in that** the device is configured in such a manner that the device estimates the mass on the basis of the relative speed between the vehicle and the impact object ($v_c$), the mass ($m_1$) of the vehicle and the rigidity ($s_1$) of the latter, the vehicle's own speed and an acceleration signal, the mass being estimated with these variables using impulse and energy conservation.

2. Device according to Claim 1, **characterized in that** the rigidity ($s_2$) of the impact object can be determined from the acceleration signal and the impact speed.

**Revendications**

1. Dispositif de commande d'un système de retenue (16) dans un véhicule selon lequel le dispositif commande le système de retenue (16) en fonction de l'évaluation de la masse de l'objet de collision,

   **caractérisé en ce que**

   le dispositif est configuré pour évaluer la masse en fonction de la vitesse relative entre le véhicule et l'objet de collision ($v_c$), de la masse ($m_1$) du véhicule ainsi que de la rigidité ($s_1$) et aussi de la vitesse propre et d'un signal d'accélération,

   et avec ces grandeurs, on évalue la masse par la conservation de l'impulsion et la conservation de l'énergie.

2. Dispositif selon la revendication 1,

   **caractérisé en ce qu'**

   on détermine la rigidité ($s_2$) de l'objet de collision en fonction du signal d'accélération et de la vitesse de collision.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19818586 C1
- DE 10100880 A1